# EUROPÄISCHE PATENTANMELDUNG

(11) **EP 3 078 520 A1**
(43) Veröffentlichungstag der Anmeldung: **12.10.2016**
(21) Anmeldenummer: 16164365.5
(22) Anmeldetag: 08.04.2016
(51) Int. Cl.: B60J 5/04, E05D 15/10

(54) **FAHRZEUGTÜRSYSTEM**

(30) Priorität: 09.04.2015 DE 202015101740 U
(71) Anmelder: Designquadrat Gbr, 50769 Köln (DE)
(72) Erfinder: Christ, Alexander, 50679 Köln (DE); Endert, Guido, 42799 Leichlingen (DE); Lehmann, Stefan, 50769 Köln (DE); Wergen, Horst, 45219 Essen (DE)
(74) Vertreter: Bals, Rüdiger

(57) **Zusammenfassung**

Die Erfindung betrifft ein Fahrzeugtürsystem (1) für eine Wohnkabine (2) eines Caravans oder eines Motorcaravans, mit wenigstens zwei Türflügeln (3, 4), wobei mit den Türflügeln (3, 4) eine Ein- und/oder Ausstiegsöffnung (5) der Wohnkabine (2) in einer Schließposition verschließbar oder in einer Öffnungsposition freigebbar ist, mit zumindest einem mit den Türflügeln (3, 4) verbundenen Öffnungsmittel (6), wobei das Öffnungsmittel (6) derart ausgestaltet ist, dass die Türflügel (3, 4) zumindest in horizontaler Richtung (x) oder zumindest in horizontaler Richtung (y) bewegbar sind.

## Beschreibung

Die vorliegende Erfindung betrifft ein Fahrzeugtürsystem für eine Wohnkabine eines Caravans oder eines Motorcaravans nach Anspruch 1 sowie ein Fahrzeug mit einer Wohnkabine mit Ein- und/oder Ausstiegsöffnung nach Anspruch 16.

Bekannte Caravans bzw. Motorcaravans, wobei es sich um Wohnwagen oder Wohnmobile handelt, umfassen zumeist eine Wohnkabine, die u. a. mit Sitzplätzen, Schlafplätzen, einer Küchenzeile und ggf. einer Waschzelle, Toilette und Stauraum ausgestattet ist. Um in die Wohnkabine des Caravans oder des Motorcaravans einsteigen zu können, ist in üblicher Weise ein Zugang in die Wohnkabine in Form einer Ein- und/oder Ausstiegsöffnung ausgestaltet, die mittels einer Tür verschlossen, bzw. freigegeben, d. h. geöffnet werden kann. Bei den bekannten Caravans oder Motorcaravans ist die Tür zumeist als einflügelige Schwenktür ausgestaltet, die drehgelagert über Drehscharniere mit der Seitenwand der Wohnkabine verbunden ist. Da bei den bekannten Caravans bzw. Motorcaravans lediglich Fahrzeugtürsysteme mit einer einflügeligen Tür verbaut sind, ist die Ein- und/oder Ausstiegsöffnung der Wohnkabine sehr schmal, weshalb der Einstieg in die Wohnkabine bzw. der Ausstieg aus der Wohnkabine mühsam ist. Zudem eignen sich die bekannten Fahrzeugtürsysteme nicht dazu, um einen behindertengerechten Zugang zu der Wohnkabine zu schaffen.

Es ist daher die Aufgabe der Erfindung, die aus dem Stand der Technik bekannten Nachteile zumindest teilweise zu überwinden. Insbesondere ist es die Aufgabe der vorliegenden Erfindung den Zugang bzw. das Verlassen, wie auch das Be- und Entladen einer Wohnkabine eines Wohnmobils oder eines Wohnwagens zu erleichtern.

Zur Lösung der Aufgabe wird ein Fahrzeugtürsystem für eine Wohnkabine eines Caravans oder eines Motorcaravans mit sämtlichen Merkmalen des Anspruchs 1 vorgeschlagen. Vorteilhafte Weiterbildungen des Fahrzeugtürsystems sind in den abhängigen Vorrichtungsansprüchen angegeben. Die Aufgabe wird weiterhin gelöst durch ein Fahrzeug mit einer Wohnkabine mit Ein- und/oder Ausstiegsöffnung mit sämtlichen Merkmalen des unabhängigen Anspruchs 16.

Weitere Merkmale und Details der Erfindung ergeben sich aus den abhängigen Vorrichtungsansprüchen, der Beschreibung und den Zeichnungen. Dabei gelten Merkmale und Details, die im Zusammenhang mit dem erfindungsgemäßen Fahrzeugtürsystem beschrieben sind, selbstverständlich auch im Zusammenhang mit dem erfindungsgemäßen Fahrzeug und jeweils umgekehrt, so dass bezüglich der Offenbarung zu den einzelnen Erfindungsaspekten stets wechselseitig Bezug genommen wird bzw. werden kann.

Das erfindungsgemäße Fahrzeugtürsystem für eine Wohnkabine eines Caravans oder eines Motorcaravans weist wenigstens zwei Türflügel auf, wobei mit den Türflügeln eine Ein- und/oder Ausstiegsöffnung der Wohnkabine in einer Schließposition verschließbar ist, oder wobei mit den Türflügeln die Ein- und/oder Ausstiegsöffnung in einer Öffnungsposition durch die Türflügel freiggebar ist. Dazu weisen die Türflügel zumindest ein mit den Türflügeln verbundenes Öffnungsmittel auf, welches derart ausgestaltet ist, dass die Türflügel zumindest in horizontaler Richtung x oder zumindest in horizontaler Richtung y bewegbar sind. Hierdurch ergibt sich eine breite und komfortable Ein- und/oder Ausstiegsöffnung für die Wohnkabine, die einen leichten Zugang zum Inneren ermöglicht. Im Sinne der vorliegenden Erfindung wird die Ein- und/oder Ausstiegsöffnung auch als Be- und/oder Entladeöffnung verstanden.

Im Gegensatz zu den bekannten Türsystemen für Wohnwagen oder Wohnmobile weist das erfindungsgemäße Fahrzeugtürsystem wenigstens zwei Türflügel auf. Dadurch, dass das erfindungsgemäße Fahrzeugtürsystem zwei Türflügel aufweist, kann die Wohnkabine eine verbreiterte Ein- und/oder Ausstiegsöffnung aufweisen. Durch die Verbreiterung der Ein- und/oder Ausstiegsöffnung und durch das variable Öffnen und Schließen der mehrflügeligen Tür des erfindungsgemäßen Fahrzeugtürsystems sind unterschiedliche Konzeptionen des Türsystems denkbar, wobei über das Öffnungsmittel bspw. beide Türflügel geöffnet sind und dadurch die Ein- und/oder Ausstiegsöffnung komplett freigegeben wird, oder nur durch Öffnen eines Türflügels die Ein- und/oder Ausstiegsöffnung nur anteilig freigegeben wird. Um die Ein- und/oder Ausstiegsöffnung komplett freizugeben, sind die Türflügel über das mit den Türflügeln verbundene Öffnungsmittel zumindest in horizontaler Richtung x oder zumindest in horizontaler Richtung y bewegbar. Als horizontale Richtung x soll dabei vorteilhafterweise ein Verschwenken der Türflügel insbesondere um eine Drehachse herum verstanden werden, wobei die Drehachse vorteilhafter Weise parallel zur Hochachse der Wohnkabine liegt, so dass die Türflügel vorteilhaft nach außen, d. h. in einer Richtung senkrecht zu einer Wand, insbesondere der Seitenwand der Wohnkabine, oder senkrecht zu einer Längsachse der Wohnkabine verschwenkbar bzw. schiebbar sind. Als Bewegung der Türflügel in Richtung y soll eine insbesondere parallele Bewegung zur Wand der Wohnkabine, insbesondere zur Seitenwand der Wohnkabine, d. h. entlang der Längsachse der Wohnkabine verstanden werden (s. Koordinatensystem in den Figuren).

Um eine Bewegung der Türflügel in horizontaler Richtung x und in horizontaler Richtung y auszugestalten, weist das Öffnungsmittel vorteilhafterweise einen Bewegungsmechanismus auf, der derart ausgebildet ist, dass die Türflügel erst in horizontaler Richtung x bewegbar und daran anschließend in horizontaler Richtung y bewegbar sind. Die Türflügel des mit einem derartigen Bewegungsmechanismus ausgestalteten Fahrzeugtürsystems sind als Schwenkschiebetürflügel ausgestaltet. Zum Öffnen der Ein- und/oder Ausstiegsöffnung werden dazu die Schwenkschiebetürflügel über das Öffnungsmittel mittels des Bewegungsmechanismus erst um die parallel zur Hochachse der Wohnkabine liegende Drehachse herum geschwenkt, wobei die Schwenkschiebetürflügel in horizontaler Richtung x bewegt werden, und können dann aus der Bewegung in horizontaler Richtung x parallel zur Wand, insbesondere zur Seitenwand der Wohnkabine, in horizontaler Richtung y bewegt werden. Bei dem als Schwenkschiebetürflügelsystem ausgestalteten Fahrzeugtürsystem ist insbesondere vorteilhaft, dass vor der translatorischen Schiebebewegung der Schwenkschiebetürflügel eine laterale Schwing- bzw. Schwenkbewegung erfolgt. Mit anderen Worten werden die Türblätter zunächst in horizontaler Richtung x, also in einer Richtung senkrecht zu einer Wand der Wohnkabine, insbesondere einer Seitenwand der Wohnkabine eines Caravans oder Motorcaravans verschwenkt und anschließend entlang der Längsachse der Wohnkabine in einer Schiebebewegung in horizontaler Richtung y bewegt. Dabei ist vorteilhaft, dass der Öffnungswinkel für die laterale Schwing- bzw. Schwenkbewegung der Türflügel zur Freigabe der Ein- und/oder Ausstiegsöffnung gegenüber Türsystemen, die über bspw. Drehscharniere an der Seitenwand angebracht sind und als Schwenktüren ausgestaltet sind, deutlich verringert werden kann, nämlich durch das Umlenken der Schwing- bzw. Schwenkbewegung in eine translatorische Schiebebewegung der Türflügel entlang der Längsachse der Wohnkabine.

Vorteilhafterweise kann das Öffnungsmittel auch einen Bewegungsmechanismus aufweisen, der im Gegensatz zu dem vorab beschriebenen Bewegungsmechanismus derart ausgestaltet ist, dass die Türflügel nur in horizontaler Richtung x bewegbar sind. Dabei sind die Türflügel vorteilhafterweise als Schwenktürflügel ausgestaltet. Die Schwenktürflügel sind vorteilhafterweise zur Ausführung einer lateralen Schwing- bzw. Schwenkbewegung über Scharnierverbindungen, vorzugsweise über Drehscharniere, welche die Drehachse für die Türflügel bilden, an der Wand der Wohnkabine, insbesondere der Seitenwand der Wohnkabine, angeordnet und verbinden die Schwenktürflügel drehgelagert mit der Wohnkabine. Im Gegensatz zu den vorab beschriebenen Schwenkschiebetürflügeln, benötigen die als Schwenktürflügel ausgestalteten Türflügel für die laterale Schwing- bzw. Schwenkbewegung mehr Raum seitlich der Wand der Wohnkabine. Vorteilhaft gegenüber den als Schwenkschiebetürflügel ausgestalteten Türflügeln ist bei den Schwenktürflügeln, dass an der Innenfläche, der als Schwenktürflügel ausgestalteten Türflügel bspw. Aufnahmen in Form von Fächern, Haken, oder bspw. ein Klapptisch angeordnet werden kann, da beim Verschwenken der Schwenktürflügel um die als Drehachse ausgebildete Scharnierverbindung herum bei einem vorzugsweise Öffnungswinkel von näherungsweise 180° die Schwenktürflügel mit ihrer Außenfläche in Richtung der Außenfläche der Wand anliegen, insbesondere der Seitenwand der Wohnkabine. Dabei wird die zuvor zum Innenraum der Wohnkabine hin liegende Innenfläche der Schwenktürflügel aus dem Innenraum der Wohnkabine heraus nach außen bewegt, so dass die Innenfläche der Türflügel für eine Person, die außerhalb der Wohnkabine steht, zugänglich ist.

Die Außenfläche der Türflügel ist vorzugsweise der Wandgeometrie, insbesondere der Seitenwandgeometrie, der Wohnkabine anpassbar. Weist bspw. die Wandgeometrie der Wohnkabine ein 3D-Verfomung in Richtung der Längs- und/oder der Hochachse der Wohnkabine auf, folgt die Außenfläche der Türflügel vorzugsweise der 3D-Verformung der Wand. Daher können die Außenflächen der Türflügel vorzugsweise auch unterschiedlich zueinander ausgestaltet sein.

Vorteilhaft können die Türflügel Fenster umfassen, die bspw. im Gegensatz zu den bekannten Fenstern in Caravanen oder Motorcaravanen als bodentiefe Fenster ausgestaltet sind. Natürlich können die Türen auch vollflächig als Fenster ausgestaltet sein, wobei dann bei Stellung der Türen in der Schließposition die Ein- und/oder Ausstiegsöffnung vollflächig verglast ist. Eine vollflächige Verglasung soll nicht auf die Ausgestaltung der Türen aus dem Material Glas verstanden werden, vielmehr können die Türen auch aus einem blickdurchlässigen Kunststoff oder einer Kombination aus blickdurchlässigem Kunststoff und Glas ausgestaltet sein.

Ebenfalls ist es auch denkbar, die Schwenktürflügel, insbesondere die Scharnierverbindung der Schwenktürflügel so auszugestalten, dass diese bspw. bei einem Öffnungswinkel von 90° zu der Wand, insbesondere der Seitenwand der Wohnkabine, arretierbar ist. Die in einem Öffnungswinkel von 90° ausgestellten Türflügel können dann bspw. als Windschutz dienen oder ein an den Innenflächen der Türflügel angeordneter Handlauf oder Griff kann als Ein- und/oder Ausstiegshilfe für eine Person verwendet werden.

Vorzugsweise kann das Öffnungsmittel einen Bewegungsmechanismus aufweisen, der derart ausgestaltet ist, dass die Türflügel nur in horizontaler Richtung y bewegbar sind, wobei die Türflügel entlang der Längsachse der Wand, insbesondere der Seitenwand der Wohnkabine, in einer Schiebebewegung bewegt werden. Die so ausgestalteten Türflügel sollen als Schiebetürflügel verstanden werden. Vorteilhaft gegenüber den Schwenkschiebetürflügeln bzw. den Schwenktürflügeln ist bei den Schiebetürflügeln, dass lediglich eine translatorische Schiebebewegung durchgeführt wird. Entsprechend kann die Ein- und/oder Ausstiegsöffnung durch die als Schiebetüren ausgestalteten Türflügel vollständig freigegeben werden, nämlich auch dann, wenn die Wand, insbesondere die Seitenwand der Wohnkabine, sehr nah an einem anderen Objekt liegt, bspw. der Caravan bzw. der Wohncaravan, der die Wohnkabine umfasst, sehr eng neben einem weiteren Fahrzeug, bspw. einem anderen Caravan oder Motorcaravan, oder in einer sehr engen Parklücke mit wenig Seitenraum geparkt ist. Zudem haben die als Schiebetürflügel ausgestalteten Türflügel den Vorteil, dass vor der Ein- und/oder Ausstiegsöffnung stehende Gegenstände, wie bspw. eine Sitzgruppe, für das Öffnen der Türflügel nicht zur Seite gestellt werden müssen, um die Ein- und/oder Ausstiegsöffnung freizugeben. Darüber hinaus kann beim Öffnen der Schiebetürflügel verhindert werden, dass eine vor der Wohnkabine im Bereich der Ein- und/oder Ausstiegsöffnung stehende Person von den Türflügeln verletzt wird.

Vorteilhafterweise können der oder die Türflügel des erfindungsgemäßen Fahrzeugtürsystems auch als Faltschiebetürflügel ausgestaltet sein. Dazu können die Türflügel in mehrere (zumindest zwei), über Scharnierverbindungen verbundene Segmente aufgeteilt sein, wobei dann beim Öffnen der Ein- und/oder Ausstiegsöffnung der Schiebetürflügel translatorisch schiebebewegt werden, und die einzelnen Segmente über die Scharnierverbindungen eine Schwing- bzw. Schwenkbewegung in horizontaler Richtung x ausführen und sich dabei relativ zueinander auffalten. Wie auch für die Schwenkschiebetürflügel beschrieben, führen die als Faltschiebetürflügel ausgestalteten Türflügel eine Bewegung in horizontaler Richtung x und in horizontaler Richtung y aus, wobei jedoch erst eine Bewegung in horizontaler Richtung y und dann in horizontaler Richtung x der Türflügel erfolgt, nämlich die Drehbewegung der Faltschiebetürflügel in horizontaler Richtung x durch die Schiebebewegung der Faltschiebetürflügel in horizontaler Richtung y bedingt ist. In bevorzugter Weise kann mit nur einem Faltschiebetürflügel die in der Wand der Wohnkabine verbreitert ausgestaltete Ein- und/oder Ausstiegsöffnung verschlossen bzw. freigegeben werden, wobei der Faltschiebetürflügel oder auch ein Falttürflügel, der nicht in einer Schiene geführt ist, nur einseitig an einem Einbaurahmen oder der Wand, insbesondere der Seitenwand, der Wohnkabine angeschlagen ist.

Allen vorab beschriebenen Türsystemen ist gemeinsam, dass durch die Variabilität des Fahrzeugtürsystems sich das Raumgefühl der Wohnkabine und das Wohnerlebnis in der Wohnkabine für Personen verbessert oder insgesamt gegenüber den bekannten Wohnkabinen für Caravane oder Motorcaravane verändert. Dabei ergeben sich durch das erfindungsgemäße Fahrzeugtürsystem neue Gestaltungsmöglichkeiten für die Grundrissgestaltung des Interieurs der Wohnkabine, bspw. die Ausgestaltung einer Lounge, oder für die Grundrissgestaltung das Exterieurs der Wohnkabine, bspw. die Ausgestaltung einer Terrasse oder Veranda, die über Ein- und/oder Ausstiegsöffnung aus der Wohnkabine heraus führt, wobei die Türen der erfindungsgemäßen Fahrzeugtürsystems als Terrassen- oder Verandatüren ausgestaltet sind.

Vorteilhafterweise weisen die Türflügel, insbesondere die als Schiebe-, Faltschiebe- oder Schwenkschiebetürflügel ausgestalteten Türflügel, zumindest ein Führungselement auf, über das die Türflügel in einer Nut führbar sind, wobei die Nut zumindest abschnittsweise linear ausgebildet ist mit zumindest einem linearen Abschnitt in horizontaler Richtung y. Die Ausbildung der Nut mit einem linearen Abschnitt in horizontaler Richtung y erlaubt die Bewegung der Türflügel in einer translatorischen Schiebebewegung entlang der Wand der Wohnkabine, insbesondere der Seitenwand der Wohnkabine, d. h. parallel zur Seitenwand der Wohnkabine oder entlang der Längsachse der Wohnkabine.

Vorteilhafterweise ist die Nut in Form eines Schienensystems ausgestaltet, in dem insbesondere die als Schiebe-, Faltschiebe- oder Schwenkschiebetürflügel ausgestalteten Türflügel parallel zu der Wand, insbesondere der Seitenwand der Wohnkabine, verschiebbar sind. Entlang des Schienensystems, wobei dieses vorzugsweise aus einer oberen Schiene und einer unteren Schiene besteht, können vorzugsweise zwischen den Schienen die Türflügel über das Führungselement, vorzugsweise über mehrere Führungselemente, parallel zu der Wand, insbesondere der Seitenwand der Wohnkabine, verschoben werden. Als Führungselement kann bspw. eine Rolle, ein Rollenlager, ein Kugellager, eine andere Rollverbindung, oder ein starr ausgebildetes Führungselement dienen, welche die Türflügel entlang der Nut in Form des Schienensystems führen.

Vorzugsweise bewegen sich die beiden Türflügel aus der Schließposition in die Öffnungsposition relativ voneinander weg und vorteilhafterweise bewegen sich die beiden Türflügel von der Öffnungsposition in die Schließposition relativ aufeinander zu. Durch diese Bewegung der Türflügel, voneinander weg oder aufeinander zu, kann die Ein- und/oder Ausstiegsöffnung vorteilhafterweise schnell geöffnet und verschlossen werden. Natürlich ist es auch denkbar, dass nur ein Türflügel aus der Schließposition in die Öffnungsposition überführt wird, wobei dann die Ein- und/oder Ausstiegsöffnung nur teilweise freigegeben ist. Eine solche Ausgestaltung des Fahrzeugtürsystems ist bspw. dann vorteilhaft, wenn der Innenraum der Wohnkabine gekühlt oder geheizt ist. Das halbseitige oder teilweise Öffnen der Ein- und/oder Ausstiegsöffnung kann dann vorteilhafterweise verhindern, dass der Innenraum der Wohnkabine zu sehr auskühlt, bzw. übermäßig viel warme Luft von außen in die gekühlte bzw. klimatisierte Wohnkabine eintritt. Dieser Effekt kann noch verstärkt werden, wenn die Türflügel asymmetrisch unterschiedlich groß ausgestaltet sind, so dass die Ein- und/oder Ausstiegsöffnung asymmetrisch zu unterschiedlichen Anteilen von den Türflügeln geschlossen und/oder freigegeben werden kann. Egal ob die Türflügel unterschiedlich groß ausgestaltet sind, d. h. diese die Ein- und/oder Ausstiegsöffnung der Wohnkabine asymmetrisch teilen, oder die Türflügel symmetrisch, d. h. gleich groß ausgestaltet sind, wobei diese die Ein- und/oder Ausstiegsöffnung der Wohnkabine symmetrisch teilen, können die beiden Türflügel unabhängig voneinander derart in die Schließ- und/oder Öffnungsposition bewegt werden, dass die Ein- und/oder Ausstiegsöffnung vollständig geschlossen ist, halb freigegeben ist oder vollständig freigegeben ist. Als "halb freigegeben" soll im Sinne der vorliegenden Erfindung verstanden werden, dass nur einer der beiden Türflügel, unabhängig davon, ob die Türflügel symmetrisch oder asymmetrisch ausgestaltet sind, aus der Schließposition in die Öffnungsposition bewegt werden kann.

Um einer Person zumindest beim Öffnen eines Türflügels aus der Schließposition in die Öffnungsposition einen Zutritt in die Wohnkabine bzw. ein Aussteigen aus der Wohnkabine zu ermöglichen, sollte die von dem Türflügel freigegebene Öffnung der Ein- und/oder Ausstiegsöffnung mindestens 500 mm, vorzugsweise 600 mm betragen, d. h. dass auch der Türflügel mindestens eine Breite von mindestens 500 mm, vorzugsweise von 600 mm aufweisen sollte. Um ein aus Wohngebäuden bekanntes Türmaß zu erreichen, wobei Öffnungsmaße von 800 mm bis 1000 mm üblich sind, sollte bei Bewegung beider Türflügel aus der Schließposition in die Öffnungsposition eine Öffnung in der Ein- und/oder Ausstiegsöffnung von mindestens 800 mm bis 1000 mm freigebbar sein, vorzugsweise von mindestens 700 mm, insbesondere von 900 mm. Zur Ausgestaltung eines behindertengerechten Zugangs, d. h. einer behindertengerechten Ein- und/oder Ausstiegsöffnung sollte die durch die beiden Türflügel freigegebene Öffnung jedoch mindestens eine lichte Breite (Fertigmaß) von 900 mm aufweisen. Da die Türflügel des erfindungsgemäßen Fahrzeugtürsystems symmetrisch oder asymmetrisch ausgestaltet sein können, weisen die Türflügel jeweils insbesondere eine Breite von 300 mm bis 700 mm, vorzugsweise von 500 mm, und besonders bevorzugt von 450 mm. Das Verhältnis der Fläche der asymmetrisch ausgestalteten Türflügel ist vorzugsweise 2:1, d. h. beispielhaft 600 mm zu 300 mm, oder 700 mm zu 350 mm.

Um das Fahrzeugtürsystem in der Wand, insbesondere der Seitenwand der Wohnkabine, platzsparend aufzunehmen, umfasst das Fahrzeugtürsystem vorteilhafterweise einen Einbaurahmen, der in die Seitenwand der Wohnkabine, welche insbesondere in Sandwichbauweise hergestellt ist, eingebaut werden kann. Ein Einbaurahmen eignet sich insbesondere auch dafür, um Caravans oder Motorcaravans auf das erfindungsgemäße Fahrzeugtürsystem umzubauen, wobei über den Einbaurahmen, die für die Wand, insbesondere die Seitenwand, geforderte Statik durch den eingebauten Rahmen gewährleistet bleibt. Dadurch kann in Verbindung mit dem Einbaurahmen, die Ein- und/oder Ausstiegsöffnung in der Wohnkabine erweitert werden, ohne dabei die Statik der Wohnkabine zu verändern. Insbesondere bei Caravans oder Motorcaravans, deren Wohnkabine in Sandwichbauweise hergestellt ist, eignet sich der Einbaurahmen auch vorzugsweise dazu, um das Öffnungsmittel zu integrieren. Vorzugsweise ist dabei das Öffnungsmittel integral mit dem Einbaurahmen ausgestaltet. Als integrale Ausgestaltung soll eine monolithische und/oder einstückige Ausgestaltung verstanden werden. Als integrale Ausgestaltung im Sinne der vorliegenden Erfindung soll aber auch bspw. ein Einbaurahmen mit daran montierten Öffnungsmitteln in einem vormontierten Zustand verstanden werden. Zusätzlich kann der Einbaurahmen eine Beleuchtung aufweisen, die integral mit dem Einbaurahmen ausgestaltet ist. Der Einbaurahmen bildet vorzugsweise die Ein- und/oder Ausstiegsöffnung und dient darüber hinaus vorzugsweise dazu, die Wohnkabine mit dem Fahrzeugtürsystem im Bereich der Ein- und/oder Ausstiegsöffnung abzudichten, wobei der Einbaurahmen vorteilhafterweise Aufnahmen für Dichtungsmittel aufweist, welche vorteilhafter Weise die Ein- und/oder Ausstiegsöffnung umschließen. Darüber hinaus kann der Einbaurahmen und/oder das Fahrzeugtürsystem vorteilhafterweise, in einem Wand-Formteil, insbesondere in einem Seitenwand-Formteil, aufgenommen sein. Im Gegensatz zu einer Wand in Sandwichbauweise, in die die Ein- und/oder Ausstiegsöffnung eingefräst, eingeschnitten oder anderweitig ausgebildet ist, ist in dem Wand-Formteil die Ein- und/oder Ausstiegsöffnung mit dem Wand-Formteil bei dessen Fertigstellung mit ausgebildet.

Insbesondere eignet sich ein als Schienen oder Schienensystem ausgestalteter Einbaurahmen zum Führen für die Schiebetürflügel. Der Einbaurahmen für die Schiebetürflügel kann dabei so ausgestaltet sein, dass der Einbaurahmen über die Breite der Ein- und/oder Ausstiegsöffnung hinausgeht und Teile der Wand, insbesondere der Seitenwand der Wohnkabine, bildet. Um die Schiebetüren in die Seitenwand einführen zu können, ist der Rahmen vorteilhafterweise so ausgestaltet, dass beidseitig der Ein- und/oder Ausstiegsöffnung in der Seitenwand ein Freiraum gebildet wird, in den jeweils ein Türflügel, der als Schiebetürflügel ausgestaltet ist, eingeführt werden kann und dabei die Ein- und/oder Ausstiegsöffnung freigibt. In der in den Freiraum eingeführten Position des Schiebetürflügels, ist der Schiebetürflügel in der Öffnungsposition. Möchte man den Schiebetürflügel aus der Öffnungsposition in die Schließposition bewegen, wird dieser entlang der Schiene, die sich vorzugsweise bis in den Freiraum erstreckt, parallel zur Seitenwand, nämlich aus dem Freiraum der Seitenwand heraus, in die Ein- und/oder Ausstiegsöffnung geführt.

Um das Fahrzeugtürsystem, nämlich die beiden Türflügel, verschließen zu können, umfasst das Fahrzeugtürsystem vorzugsweise eine Schließmechanik, welche vorzugsweise auch zum Verschließen der Ein- und/oder Ausstiegsöffnung dient, wobei die Schließmechanik zwischen den beiden Türflügeln, bspw. in Form eines Verriegelungsmechanismus, und/oder zwischen den Türflügeln und dem Rahmen bzw. den Türflügen und der Seitenwand der Wohnkabine, bspw. auch in Form eines Verriegelungselementes, ausgestaltet sein kann. Die Schließmechanik kann aber auch bereits in dem Öffnungsmittel oder in dem Bewegungsmechanismus, welcher vom Öffnungsmittel umfasst wird, ausgestaltet sein. Bspw. kann in der Schließposition der Bewegungsmechanismus so arretiert werden, dass eine Bewegung der Türflügel relativ voneinander weg unterbunden wird. Ist das Öffnungsmittel bzw. der Bewegungsmechanismus mittels eines Stellantriebs, in Form eines Motors, angetrieben, kann über die Motorsteuerung oder bspw. über ein zwischen dem Antrieb und dem Bewegungsmechanismus ausgebildeten Getriebe die Schließmechanik ausgestaltet sein. Bspw. kann der Antrieb in Form eines Elektromotors so ausgestaltet werden, dass bei Nichtanliegen einer Spannung der Motor den Bewegungsmechanismus bzw. das Öffnungsmittel blockiert. Eine Schließmechanik im Sinne der vorliegenden Erfindung kann auch integral in einer Handhabe ausgestaltet sein, mit der die Türflügel des Fahrzeugtürsystems manuell bewegbar sind. Die Handhabe oder Schließmechanik kann bspw. ein abschließbarer und/oder versenkbarer Handgriff sein. Eine Handhabe im Sinne der vorliegenden Erfindung kann bspw. auch als ein Nummerntastenfeld ausgestaltet sein, über das ein Sicherheitscode zum Öffnen der Türflügel des erfindungsgemäßen Fahrzeugtürsystems eingegeben werden muss. Eine Handhabe bzw. eine Schließmechanik im Sinne der vorliegenden Erfindung kann auch bspw. ein Fingerabdrucksensor oder - scanner sein, bzw. ein Handabdrucksensor oder -scanner, über welche nur berechtigte Personen Zugang zu der Wohnkabine über das erfindungsgemäße Fahrzeugtürsystem erlangen.

Zusätzlich zu den beiden Türflügeln, die sich relativ voneinander weg bewegen bzw. relativ aufeinander zu bewegen, um die Ein- und/oder Ausstiegsöffnung freizugeben bzw. diese zu verschließen, kann oberhalb oder unterhalb der Türflügel ein weiterer Türflügel aus einer Rückzugsposition in eine Auszugsposition überführt werden, wobei sich der weitere Türflügel bei Bewegung mindestens einem der Türflügel aus der Öffnungsposition in die Schließposition in horizontaler Richtung aus der Auszugsposition in die Rückzugsposition überführt wird. Ein weiterer Türflügel im Sinne der vorliegenden Erfindung, der unterhalb der Ein- und/oder Ausstiegsöffnung aus- bzw. einziehbar ist, kann vorzugsweise ein ausziehbarer Terrassenboden oder eine ausfahrbare Aufstiegsstufe sein. Als Aufstiegsstufe im Sinne der vorliegenden Erfindung wird auch eine Aufstiegstreppe verstanden, die aus mehreren Stufen, nämlich mindestens aus zwei Aufstiegsstufen, ausgestaltet ist. Der Terrassenboden ist dabei in vorteilhafterweise bodengleich zu der begehbaren Fläche des Bodens der Wohnkabine. Über den ausziehbaren Terrassenboden lässt sich in vorteilhafterweise der Wohnraum, der durch die Wohnkabine des Caravans oder des Motorcaravans begrenzt ist, über die Ein- und/oder Ausstiegsöffnung nach außerhalb der Wohnkabine durch die Ausgestaltung einer Terrasse oder Veranda in Form eines unterhalb der Türflügel in eine Auszugsposition überführten weiteren Türflügel erweitern.

Als ein weiterer Türflügel, der oberhalb der Ein- und/oder Ausstiegsöffnung aus einer Rückzugsposition in eine Auszugsposition überführt werden kann, soll im Sinne der vorliegenden Erfindung ein Regenvordach, oder aber auch eine Markise verstanden werden, welche bspw. den unterhalb der Ein- und/oder Ausstiegsöffnung ausgezogenen Terrassenboden überspannen. Ein als Regenvordach ausgezogener weiterer Türflügel dient vorzugsweise dazu, dass bei geöffneter Ein- und/oder Ausstiegsöffnung der Innenraum der Wohnkabine beschattet wird bzw. dieser regengeschützt ist. Der weitere Türflügel, der ober- oder unterhalb der Ein- und/oder Ausstiegsöffnung aus einer Schließposition in einer Öffnungsposition überführbar ist, kann auch als Insektenschutz oder als Verdunkelung ausgestaltet sein. Auch kann in vorteilhafterweise der oberhalb der Ein- und/oder Ausstiegsöffnung ausgestaltete weitere Türflügel eine ausziehbare bzw. ausfahrbare Projektionsfläche, für bspw. einen Beamer, sein. Um unabhängig von der Bewegung der Türflügel die weiteren, bspw. als Terrassenboden oder als Regenvordach aus der Rückzugsposition in die Auszugsposition überführten Türflügel in dieser Position zu halten, ist die Bewegung der Türflügel von der Bewegung der weiteren Türflügel derart entkoppelbar, dass bei Bewegung der Türflügel aus der Öffnungsposition in die Schließposition die Türflügel in der Auszugsposition verbleiben und/oder bei Bewegung der Türflügel aus der Schließposition in die Öffnungsposition die Türflügel in der Rückzugsposition verbleiben. Aufgrund der Entkopplungsmöglichkeit bietet sich die Möglichkeit, einen als weiteren Türflügel bspw. ausgezogenen Terrassenboden auch beim Verschließen der Ein- und/oder Ausstiegsöffnung in der Auszugsposition zu belassen. Dadurch wird in vorteilhafterweise eine Belegung der Terrasse, nämlich bspw. durch Gartenmöbel oder durch einen Esstisch auch beim Überführen der Türflügel in die Schließposition ermöglicht, ohne dass es zuvor notwendig wird, die Gartenmöbel oder den Esstisch von der Terrasse zu entfernen. Entsprechend kann die Ein- und/oder Ausstiegsöffnung der Wohnkabine bspw. auch bei ausgefahrenem Terrassenboden oder bei ausgefahrenem Regendach oder Markise über die Schließmechanik verschlossen werden, um einen unberechtigten Zugang in die Wohnkabine zu verhindern.

In bevorzugter Weise ist das Öffnungsmittel, bzw. der Bewegungsmechanismus, der von dem Öffnungsmittel umfasst wird, und/oder die Schließmechanik elektronisch ansteuerbar. Eine elektronische Ansteuerung kann bspw. via Funkverbindung, d. h. mittels einer Fernbedienung erfolgen. Eine elektronische Ansteuerung des Öffnungsmittels und/oder der Schließmechanik kann vorteilhaft auch über einen Fingerabdruckscanner, einen Handabdruckscanner oder mittels einem über ein Tastenfeld eingegebenen Sicherheitscode erfolgen, nämlich durch Datenübermittlung an eine Steuereinheit, welche nach positiver Identifizierung einer berechtigten Person das erfindungsgemäße Fahrzeugtürsystem automatisch öffnet oder schließt.

Grundsätzlich ist das erfindungsgemäße Fahrzeugtürsystem sowohl in der Seitenwand als auch in der Heckwand einer Wohnkabine eines Caravans oder eines Motorcaravans einsetzbar.

Die Aufgabe der vorliegenden Erfindung wird ebenfalls gelöst durch ein Fahrzeug, insbesondere nach Anspruch 16, mit einer Wohnkabine mit Ein- und/oder Ausstiegsöffnung, insbesondere ein Caravan oder ein Motorcaravan, welcher das erfindungsgemäße Fahrzeugtürsystem umfasst. Als Caravan oder Motorcaravan wird ein Wohnwagen oder ein Wohnmobil verstanden. In vorteilhafterweise, aber nicht einschränkend für diese Erfindung zu verstehen, ist die Wohnkabine als holzfreier Aufbau ausgestaltet, der aus Vollsandwichplatten besteht. Die Sandwichplatten bestehen vorzugsweise aus hochfestem, geschlossenzelligen Isoliermaterial mit aufgeklebter Verblechung und Innenverkleidung, wobei die Außenseite der Sandwichplatten in der Regel aus Metall oder Kunststoff besteht. Die Wohnkabine kann vorteilhafterweise auch aus selbsttragenden Wänden mit einem Holzfachwerk bestehen, welches mit Isoliermaterial, meist als expandiertes Polystyrol (EPS) und extrudiertes Polystyrol (XPS) insbesondere in Form von Schaumstoff ausgefüllt ist.

Um hier Wiederholungen bzgl. weiterer Vorteile des erfindungsgemäßen Fahrzeugs mit Wohnkabine zu vermeiden, wird auf die Beschreibung der vorteilhaften Ausgestaltung des erfindungsgemäßen Fahrzeugtürsystems verwiesen und es wird vollumfänglich auf diese zurückgegriffen.

Weitere, die Erfindung verbessernde Maßnahmen ergeben sich aus der nachfolgenden Beschreibung von Ausführungsbeispielen der Erfindung, welche in den Figuren schematisch dargestellt sind. Sämtliche aus den Ansprüchen, der Beschreibung oder den Zeichnungen hervorgehenden Merkmale und/oder Vorteile, einschließlich konstruktiver Einzelheiten, räumliche Anordnungen und eventuell auch Verfahrensschritte, können sowohl für sich, als auch in verschiedensten Kombination erfindungswesentlich sein. Dabei ist zu beachten, dass die Figuren nur beschreibenden Charakter haben und nicht dazu gedacht sind, die Erfindung in irgendeiner Form einzuschränken. Es zeigen:
- Figur 1: ein Ausführungsbeispiel eines erfindungsgemäßen Fahrzeugtürsystems für eine Wohnkabine eines Caravans oder eines Motorcaravans, bei dem die Türflügel als Schwenkschiebetürflügel ausgestaltet sind, in einer halboffenen Freigabe der Ein- und/oder Ausstiegsöffnung,
- Figur 2: das Fahrzeugtürsystem aus Figur 1 mit vollständiger Freigabe der Ein- und/oder Ausstiegsöffnung,
- Figur 3: eine Ausführungsvariante des erfindungsgemäßen Fahrzeugtürsystems, bei dem die Türflügel als Schwenktürflügel ausgestaltet sind, in einer halboffenen Freigabe der Ein- und/oder Ausstiegsöffnung einer Wohnkabine eines Caravans oder eines Motorcaravans,
- Figur 4: das Fahrzeugtürsystem aus Figur 3 mit vollständiger Freigabe der Ein- und/oder Ausstiegsöffnung,
- Figur 5: das Fahrzeugtürsystem aus den Figuren 3 und 4 mit oberhalb und unterhalb der Ein- und/oder Ausstiegsöffnung in eine Auszugsposition geführten weiteren Türflügeln und
- Figur 6a-c: ein Ausführungsbeispiel eines Öffnungsmittels mit einem Bewegungsmechanismus für als Schwenkschiebetürflügel ausgestaltete Türflügel des erfindungsgemäßen Fahrzeugtürsystems.

In den unterschiedlichen Figuren sind gleiche Teile stets mit denselben Bezugszeichen versehen, weshalb diese in der Regel nur einmal beschrieben werden.

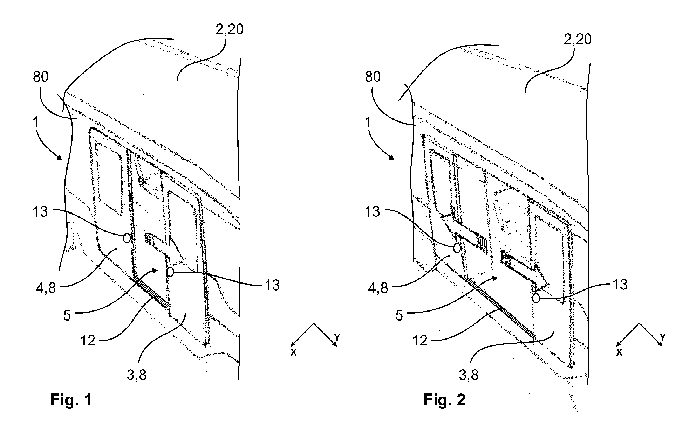

Die Figuren 1 und 2 zeigen eine Ausführungsvariante eines erfindungsgemäßen Fahrzeugtürsystems 1 für eine Wohnkabine 2 eines Caravans oder eines Motorcaravans, welche als Fahrzeug 20 bezeichnet werden. Als Caravan wird ein Wohnwagen verstanden und als Motorcaravan wird ein Wohnmobil verstanden. Das Fahrzeugtürsystem 1 weist zwei Türflügel 3, 4 auf, die in Figur 1 eine Ein- und/oder Ausstiegsöffnung 5 der Wohnkabine 2 durch Bewegung des vorderen Türflügels 3 aus einer Schließposition in eine Öffnungsposition halboffen freigibt. Der hintere Türflügel 4 befindet sich weiterhin in der Schließposition, so dass die Ein- und/oder Ausstiegsöffnung 5 der Wohnkabine 2 durch den Türflügel 4 halb verschlossen ist. In Figur 2 ist auch der hintere Türflügel 4 aus der Schließposition in die Öffnungsposition überführt, wodurch die Ein- und/oder Ausstiegsöffnung 5 der Wohnkabine 2, wie in Figur 2 dargestellt, vollständig freigegeben ist. Zum Öffnen der Ein- und/oder Ausstiegsöffnung 5 werden die Türflügel 3, 4 in horizontaler Richtung x, d. h. senkrecht zur Wand 80 der Wohnkabine 2, wobei es sich hier um eine Seitenwand 80 der Wohnkabine 2 handelt, bewegt, um dann wie in den Figuren 1 und 2 dargestellt, translatorisch entlang der Längsachse, d. h. parallel zur Seitenwand 80 der Wohnkabine 2 verschoben zu werden. Durch das beidseitige Öffnen der Ein- und/oder Ausstiegsöffnung 5 durch die Türflügel 3, 4, die als Schwenkschiebetürflügel 8 ausgestaltet sind, ist die Ein- und/oder Ausstiegsöffnung 5 vollständig freigegeben, wodurch der Einstieg in die Wohnkabine 2 oder der Ausstieg aus der Wohnkabine 2 erleichtert ist. Um die Türflügel 3, 4, die als Schiebetürflügel 8 ausgestaltet sind, zumindest in horizontaler Richtung y, d. h. parallel zur Seitenwand 80 der Wohnkabine 2 zu führen, umfasst das Fahrzeugtürsystem 1 einen Einbaurahmen 12 mit Nut, der in den Figuren 1 und 2 im unteren Bereich der Ein- und/oder Ausstiegsöffnung 5 durch eine unterbrochene Linie dargestellt ist, da dieser vorzugsweise zur Verhinderung von Verschmutzung abgedeckt ist und nicht sichtbar in der Ein- und/oder Ausstiegsöffnung 5 verbaut ist. Wie in den Figuren 1 und 2 zu erkennen ist, sind die Türen 3 und 4 aus der Schließposition relativ voneinander weg bewegbar, und bewegen sich aus der Öffnungsposition in die Schließposition relativ aufeinander zu. Zum Verschließen, d. h. zum Abschließen der Ein- und/oder Ausstiegsöffnung weisen die Türen 3 und 4 eine Schließmechanik 13 auf, die in der Schließposition der beiden Türflügel 3 und 4 zwischen den Türflügeln 3 und 4 wirkt. Die Schließmechanik 13 kann bspw. eine Verriegelung sein, wobei bspw. ein an dem Türflügel 3 ausgestaltetes Verriegelungselement, bspw. in Form eines Riegels, in einer am Türflügel 4 ausgestalteten Ausnehmung derart greift, dass zumindest die Bewegung des Türflügels 3 in horizontaler Richtung x relativ zu dem Türflügel 4 durch das Eingreifen des Verriegelungselementes in die Ausnehmung, verhindert wird. Natürlich kann das Verriegelungselement auch derart ausgestaltet sein, dass eine Bewegung des Türflügels 3 relativ zu dem Türflügel 4 in horizontaler Richtung y, d. h. parallel zur Seitenwand 80 der Wohnkabine 2, verhindert wird.

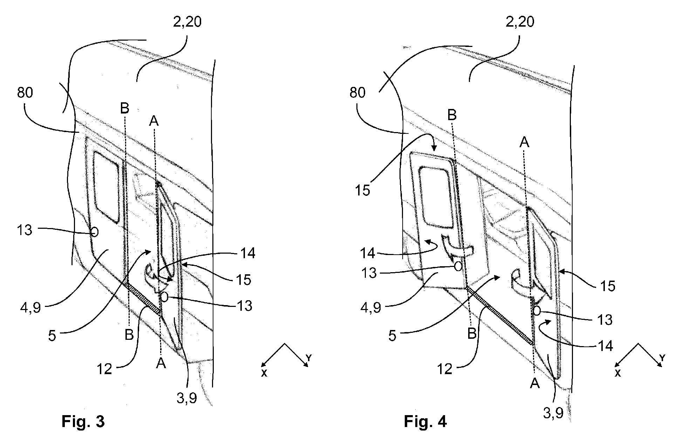

Die Figuren 3 und 4 zeigen eine Ausführungsvariante des erfindungsgemäßen Fahrzeugtürsystems 1, wobei die Türflügel 3 und 4 als Schwenktürflügel 9 in der Seitenwand 80 einer Wohnkabine 2 eines Caravans oder eines Motorcaravans ausgestaltet sind. Figur 3 zeigt eine halboffene Stellung des Fahrzeugtürsystems 1, wodurch die Ein- und/oder Ausstiegsöffnung 5 halb geöffnet ist. Dazu ist der vordere Türflügel 3 in x-Richtung um die Drehachse A-A mit einem Öffnungswinkel von ca. 160° verschwenkt. Die Innenfläche 14 des Türflügels 3 ist dabei aus dem Innenraum der Wohnkabine 2 durch das Verschwenken derart ausgerichtet, dass diese eine außerhalb der Wohnkabine 2 stehenden Person zugewandt ist. Vorteilhafterweise lassen sich die Türflügel 3 und 4, die als Schwenktürflügel 9 ausgestaltet sind, bis zu einem Öffnungswinkel 180°um die Drehachse A herum verschwenken. Bei einem Öffnungswinkel von 180° liegen dann die Außenflächen 15 auf der äußeren Fläche der Seitenwand 80 an. In Figur 4 sind beide Türflügel 3 und 4 jeweils mit einem Öffnungswinkel von ca. 160° geöffnet, wobei der als Schwenktürflügel 9 ausgestaltete Türflügel 3 um die Drehachse A-A herum und der als Schwenktürflügel 9 ausgestaltete Türflügel 4 um die Drehachse B-B herum relativ voneinander aus der Schließposition in die Öffnungsposition in horizontaler Richtung x weg bewegt wurden. Die Drehachse A-A und B-B werden vorzugsweise durch Scharnierverbindungen (hier nicht dargestellt) realisiert, wobei die Scharnierverbindungen bspw. als Drehscharniere jeweils außen an den Türflügel 3 und 4, nämlich entlang der Drehachsen A-A und B-B ausgestaltet sind, um die Türflügel 3 und 4 mit der Seitenwand 80 der Wohnkabine 2 zu verbinden. Drehachsen A-A und B-B liegen parallel zur Hochachse der Wohnkabine 2. Vorzugsweise sind die Scharnierverbindungen integraler Bestandteil des Rahmens 12. Im Gegensatz zu der Ausführungsvariante, wie in den Figuren 1 und 2 dargestellt, ist die Schließmechanik 13 jeweils zwischen den Türflügeln 3 und 4 und der Seitenwand 80, bzw. dem Rahmen 12 ausgestaltet. Die Schließmechanik 13 kann dabei bspw. auf die entlang der Drehachsen A-A und B-B angeordneten Scharnierverbindungen derart wirken, dass die Drehbewegung der Türflügel 3 und 4 in horizontaler Richtung x um die Drehachse A-A und die Drehachse B-B herum unterbunden oder freigegeben wird.

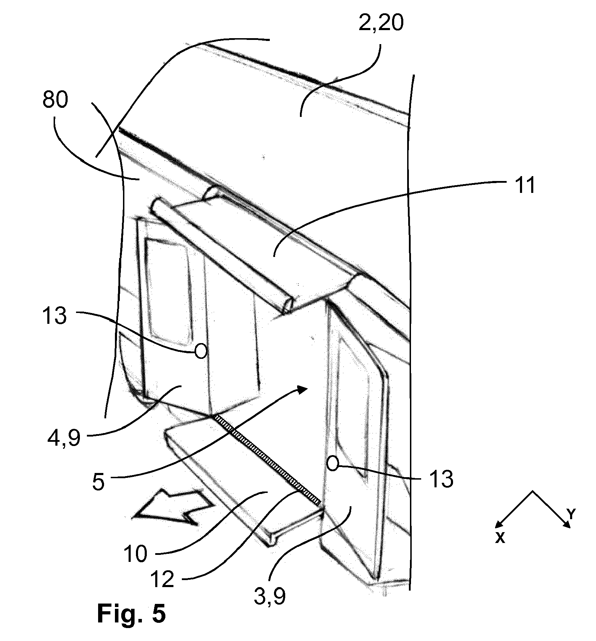

Figur 5 zeigt die Ausführungsvariante des Fahrzeugtürsystems 1 der Figuren 3 und 4 mit zusätzlich einem oberhalb der Ein- und/oder Ausstiegsöffnung 5 in einer Auszugsposition geführten weiteren Türflügels 11 und einem unterhalb der Ein- und/oder Ausstiegsöffnung 5 ausgestalteten weiteren Türflügels 10 in einer Auszugsposition. Bei dem weiteren Türflügel 11 handelt es sich vorliegend um ein Regenvordach oder eine Markise und bei dem weiteren Türflügel 10 unterhalb der Ein- und/oder Ausstiegsöffnung 5 handelt es sich vorliegend um einen Terrassenboden, der bodengleich mit der begehbaren Fläche des Bodens der Wohnkabine 2 ist. Entsprechend kann über den weiteren Türflügel 10, der als Terrassenboden ausgestaltet ist, die Wohnkabine 2 barrierefrei bestiegen werden. Ein Zurückfahren der weiteren Türflügel 10 und 11 aus der hier dargestellten Auszugsposition in eine Rückzugsposition beim Verschließen der Türflügel 3 und 4, kann verhindert werden, wenn die Bewegung der Türflügel 3 und 4 von der Bewegung der Türflügel 10 und 11 entkoppelt ist. Dadurch kann die Ein- und/oder Ausstiegsöffnung 5 der Wohnkabine 2 durch die Türflügel 3 und 4 verschlossen werden, ohne dabei die weiteren Türflügel 10 und 11 wieder in ihre Rückzugsposition zu führen. Vorzugsweise ist der Bewegungsmechanismus, der zur Überführung der weiteren Türflügel 10 und 11 aus der Rückzugsposition in die Auszugsposition und aus der Auszugsposition in die Rückzugsposition dient, integral mit dem Einbaurahmen 12 des Fahrzeugtürsystems 1 ausgestaltet. Das Ausfahren der weiteren Türflügel 10 und 11 in horizontaler Richtung x erfolgt vorteilhaft parallel zum Boden bzw. zur Dachfläche der Wohnkabine 2. Vorzugsweise kann insbesondere der weitere Türflügel 10, der unterhalb der Ein- und/oder Ausstiegsöffnung 5 aus der Rückzugsposition in die Auszugsposition ausfahrbar ist, sich zur Aufstandsfläche der Wohnkabine 2, d. h. insbesondere zum Boden hin, neigen, so dass der weitere Türflügel 10 als Rampe dient, die bspw. dazu dient, um mit einem Rollstuhl durch die Ein- und/oder Ausstiegsöffnung 5 in die Wohnkabine 2 zu fahren.

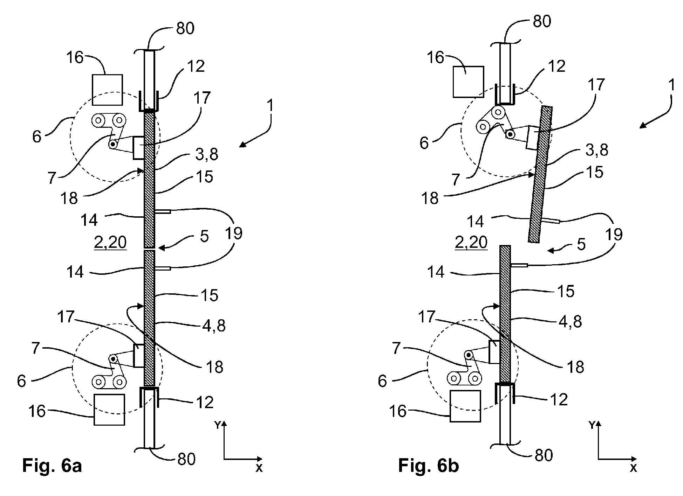

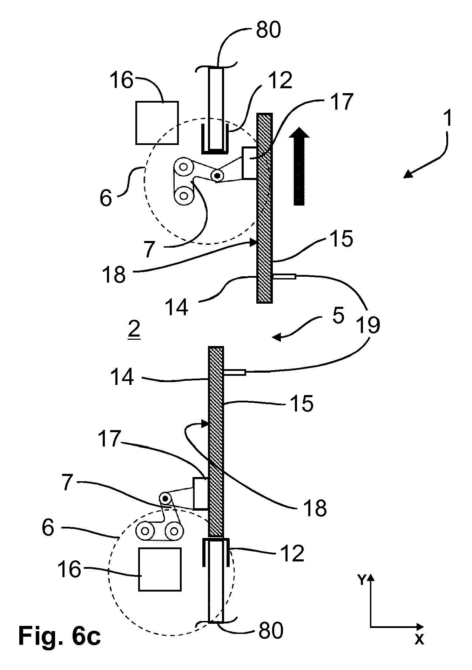

Die Figuren 6a bis 6c zeigen eine Ausführungsvariante eines Öffnungsmittels 6 für ein Fahrzeugtürsystem 1 gemäß der vorliegenden Erfindung mit Schnittansicht auf das Fahrzeugtürsystem 1 von oben. Die symmetrisch ausgestalteten Schwenktürflügel 3, 8 und 4, 8 sind zwischen einem Rahmen 12 aufgenommen, der mit der Seitenwand 80 der Wohnkabine 2 des Fahrzeuges 20 verbunden ist. Die Türflügel 3, 8 und 4, 8 verschließen in der in Figur 6a dargestellten Schließposition die Ein- und/oder Ausstiegsöffnung 5 der Wohnkabine 2. Vorliegend weisen die Öffnungsmittel 6 einen Bewegungsmechanismus 7 auf, der eine Bewegung der Türflügel 3, 8 und 4, 8 sowohl in horizontaler Richtung x als auch in horizontaler Richtung y erlaubt. Der Bewegungsmechanismus 7 kann mit einem Antrieb 16, bspw. einem Stellmotor, verbunden sein, über den die Türflügel 3, 8 und 4, 8 aus der Schließposition in die Öffnungsposition bewegt werden können. Der Bewegungsmechanismus 7 des Öffnungsmittels 6 ist über ein Führungselement 17 mit den Türflügeln 3, 8 und 4, 8 verbunden. Das Führungselement 17 ist in einer Nut 18 führbar, die zumindest einen linearen Abschnitt in horizontaler Richtung y an der Innenfläche 14 der Türflügel 3, 8 und 4, 8 aufweist. In Figur 6a verschließen die Türflügel 3, 8 und 4, 8 in ihrer Schließposition die Ein- und/oder Ausstiegsöffnung 5 der Wohnkabine 2. Figur 6b zeigt wie zur zumindest teilweisen Freigabe der Ein- und/oder Ausstiegsöffnung 5 der in der Figur 6b obere Türflügel 3, 8 über den Bewegungsmechanismus 7 in horizontaler Richtung x bewegt wird, in einer Zwischenstellung. Figur 6c zeigt die Bewegung des Türflügels 3, 8 in horizontaler Richtung x über den Bewegungsmechanismus 7 in einer Endstellung. Nachdem die Endstellung in horizontaler Richtung x erreicht ist, kann der Türflügel 3, 8 relativ zu dem Führungselement 17 entlang der Nut 18 parallel zu der Seitenwand 80 in horizontaler Richtung y relativ von dem Türflügel 4, 8 in Richtung des in der Figur 6c dargestellten Pfeils wegbewegt werden. Durch Bewegung des Türflügels 3, 8 aus der Schließposition, wie in Figur 6a dargestellt, in die Öffnungsposition, wird die Ein- und/oder Ausstiegsöffnung 5 der Wohnkabine 2 halb geöffnet, d. h. zur Hälfte freigegeben. Werden beide Türflügel 3, 8 und 4, 8 in die Öffnungsposition bewegt, wird die Ein- und/oder Ausstiegsöffnung 5 der Wohnkabine 2 vollständig geöffnet, d. h. vollständig freigegeben. Wie in Figur 6b zu erkennen ist, befindet sich der Türflügel 3, 8 in einer gegenüber der geschlossenen Position sowohl in horizontaler Richtung x als auch in horizontaler Richtung y verschobenen Position. Mit anderen Worten ist der Türflügel 3, 8 über die relative Rotationsbewegung zwischen dem Bewegungsmechanismus 7 und dem Türflügel 3, 8 und die anschließende translatorische Schiebebewegung des Führungselements 17 relativ zu dem Türflügel 3, 8, welche sich an die rotatorische Schwenkbewegung des Türflügels 3, 8 anschließt, aus der Schließposition, in die Öffnungsposition überführt. Zusätzlich oder alternativ zu dem Antrieb 16 kann an den Türflügel 3, 8 und 4, 8 eine Handhabe 19, bspw. in Form eines Griffes oder einer Türklinke, ausgestaltet sein, mit der sich die Türflügel 3, 8 und 4, 8 entweder unterstützt durch den Antrieb 16 oder aber rein manuell bewegen lassen. Entgegen der Darstellung in den Figuren 6a bis 6c kann das Öffnungsmittel 6, nämlich insbesondere der Befestigungsmechanismus 7 integral mit dem Einbaurahmen 12 ausgestaltet, bzw. an diesem befestigt sein.

Insgesamt können die in den Figuren 1 bis 6 dargestellten Fahrzeugtürsysteme 1 bspw. mittels einer Fernbedienung bedient werden.

### Bezugszeichenliste

- 1: Fahrzeugtürsystem
- 2: Wohnkabine
- 3: Türflügel
- 4: Türflügel
- 5: Ein- und/oder Ausstiegsöffnung
- 6: Öffnungsmittel
- 7: Bewegungsmechanismus
- 8: Schwenkschiebetürflügel
- 9: Schwenktürflügel
- 10: Türflügel, Terrassenboden
- 11: Türflügel, Regenvordach, Markise
- 12: Einbaurahmen
- 13: Schließmechanik
- 15: Außenflächen
- 16: Antrieb
- 17: Führungselement
- 18: Nut
- 19: Handhabe
- 20: Fahrzeug

- 80: Wand der Wohnkabine 2

- x: horizontale Richtung
- y: horizontale Richtung

- A-A: Drehachse
- B-B: Drehachse

## Patentansprüche

1. Fahrzeugtürsystem (1) für eine Wohnkabine (2) eines Caravans oder eines Motorcaravans, mit wenigstens zwei Türflügeln (3, 4), wobei mit den Türflügeln (3, 4) eine Ein- und/oder Ausstiegsöffnung (5) der Wohnkabine (2) in einer Schließposition verschließbar oder in einer Öffnungsposition freigebbar ist, mit zumindest einem mit den Türflügeln (3, 4) verbundenen Öffnungsmittel (6), wobei das Öffnungsmittel (6) derart ausgestaltet ist, dass die Türflügel (3, 4) zumindest in horizontaler Richtung (x) oder zumindest in horizontaler Richtung (y) bewegbar sind.

2. Fahrzeugtürsystem (1) nach Anspruch 1,
**dadurch gekennzeichnet,**
**dass** die Türflügel (3, 4) als Schwenkschiebetürflügel (8) ausgestaltet sind und/oder dass die Türflügel (3, 4) als Schwenktürflügel (9) ausgestaltet sind und/oder dass die Türflügel (3, 4) als Schiebetürflügel (9) ausgestaltet sind.

3. Fahrzeugtürsystem (1) nach Anspruch 1 oder 2,
**dadurch gekennzeichnet,**
**dass** das Öffnungsmittel (6) einen Bewegungsmechanismus (7) aufweist, der derart ausgestaltet ist, dass die Türflügel (3, 4) nur in horizontaler Richtung (x) bewegbar sind und/oder
**dass** die Schwenktürflügel (9) mit einem Öffnungswinkel bis zu 180° schwenkbar sind und/oder
**dass** das Öffnungsmittel (6) einen Bewegungsmechanismus (7) aufweist, der derart ausgestaltet ist, dass die Türflügel (3, 4) nur in horizontaler Richtung (y) bewegbar sind.

4. Fahrzeugtürsystem (1) nach einem der vorhergehenden Ansprüche,
**dadurch gekennzeichnet,**
**dass** die Türflügel (3, 4) zumindest ein Führungselement (17) aufweisen, über das die Türflügel (3, 4) in einer Nut (18) führbar sind, wobei die Nut (18) zumindest abschnittweise linear ausgebildet ist mit zumindest einem linearen Abschnitt in horizontaler Richtung (y).

5. Fahrzeugtürsystem (1) nach einem der vorhergehenden Ansprüche,
**dadurch gekennzeichnet,**
**dass** das Öffnungsmittel (6) einen Bewegungsmechanismus (7) aufweist, der derart ausgestaltet ist, dass die Türflügel (3, 4) erst in horizontaler Richtung (x) bewegbar sind und daran anschließend in horizontaler Richtung (y) bewegbar sind.

6. Fahrzeugtürsystem (1) nach einem der vorhergehenden Ansprüche,
**dadurch gekennzeichnet,**
**dass** die Nut (18) in Form eines Schienensystems ausgestaltet ist, in dem die Türflügel (3, 4) insbesondere parallel zu einer Wand (80) der Wohnkabine (2) verschiebbar sind.

7. Fahrzeugtürsystem (1) nach einem der vorhergehenden Ansprüche,
**dadurch gekennzeichnet,**
**dass** die beiden Türflügel (3, 4) sich aus der Schließposition in die Öffnungsposition relativ voneinander wegbewegen, und dass die beiden Türflügel (3, 4) sich aus der Öffnungsposition in die Schließposition relativ aufeinander zubewegen.

8. Fahrzeugtürsystem (1) nach einem der vorhergehenden Ansprüche,
**dadurch gekennzeichnet,**
**dass** die Türflügel (3, 4) gleich groß ausgestaltet sind, so dass die Ein- und/oder Ausstiegsöffnung (5) der Wohnkabine (2) zu gleichen Anteilen von den Türflügeln (3, 4) geschlossen und freigegeben werden kann oder
**dass** die Türflügel (3, 4) unterschiedlich groß ausgestaltet sind, so dass die Ein- und/oder Ausstiegsöffnung (5) der Wohnkabine (2) zu unterschiedlichen Anteilen von den Türflügeln (3, 4) geschlossen und freigegeben werden kann.

9. Fahrzeugtürsystem (1) nach einem der vorhergehenden Ansprüche,
**dadurch gekennzeichnet,**
**dass** die beiden Türflügel (3, 4) unabhängig voneinander derart in die Schließ- und/oder Öffnungsposition bewegbar sind, dass die Ein- und/oder Ausstiegsöffnung (5) vollständig geschlossen ist, halb freigegeben ist oder vollständig freigegeben ist.

10. Fahrzeugtürsystem (1) nach einem der vorhergehenden Ansprüche,
**dadurch gekennzeichnet,**
**dass** zumindest ein Türflügel (3, 4) aus der Schließposition soweit in die Öffnungsposition bewegbar ist, dass eine Öffnung von mindestens 500 mm, insbesondere von 600 mm, in der Ein- und/oder Ausstiegsöffnung (5) durch den Türflügel (3, 4) freigebbar ist und/oder
**dass** bei Bewegung beider Türflügel (3, 4) aus der Schließposition in die Öffnungsposition eine Öffnung von mindestens 700 mm, insbesondere von 900 mm, in der Ein- und/oder Ausstiegsöffnung (5) durch die Türflügel (3, 4) freigegebbar ist.

11. Fahrzeugtürsystem (1) nach einem der vorhergehenden Ansprüche, weiterhin umfassend einen Einbaurahmen (12), der in die Wand (80) der Wohnkabine (2), insbesondere in eine Seitenwand (80) in Sandwichbauweise der Wohnkabine (2), einbaubar ist und/oder
dass der Einbaurahmen (12) das Öffnungsmittel (6) umfasst, insbesondere das Öffnungsmittel (6) integral mit dem Einbaurahmen (12) ausgestaltet ist und/oder dass der Einbaurahmen (12) die Schiene zum Führen für die Schiebetürflügel (9) umfasst, insbesondere die Schiene integral mit dem Einbaurahmen (12) ausgestaltet ist.

12. Fahrzeugtürsystem (1) nach einem der vorhergehenden Ansprüche, weiterhin umfassend eine Schließmechanik (13) zum Verschließen der Ein- und/oder Ausstiegsöffnung (5), wobei die Schließmechanik (13) zwischen den beiden Türflügeln (3, 4) und/oder zwischen den Türflügeln (3, 4) und dem Rahmen (12) ausgestaltet ist.

13. Fahrzeugtürsystem (1) nach einem der vorhergehenden Ansprüche, weiterhin umfassend mindestens einen weiteren Türflügel (10, 11), der bei Bewegung mindestens eines Türflügels (3, 4) aus der Schließposition in die Öffnungsposition oberhalb und/oder unterhalb der Ein- und/oder Ausstiegsöffnung (5) in horizontaler Richtung (x) aus einer Rückzugsposition in eine Auszugsposition überführbar ist, und wobei der weitere Türflügel (10, 11) bei Bewegung des Türflügels (3, 4) aus der Öffnungsposition in die Schließposition in horizontaler Richtung (x) aus der Auszugsposition in die Rückzugsposition überführbar ist.

14. Fahrzeugtürsystem (1) nach einem der vorhergehenden Ansprüche,
**dadurch gekennzeichnet,**
**dass** ein weiterer Türflügel (10) unterhalb der Ein- und/oder Ausstiegsöffnung (5) als ausziehbarer Terrassenboden oder als ausfahrbare Aufstiegsstufe ausgestaltet ist und/oder
**dass** ein weiterer Türflügel (11) oberhalb der Ein- und/oder Ausstiegsöffnung (5) als Markise oder als Regenvordach ausgestaltet ist.

15. Fahrzeugtürsystem (1) nach einem der vorhergehenden Ansprüche,
**dadurch gekennzeichnet,**
**dass** die Bewegung der Türflügel (10, 11) von der Bewegung der Türflügel (3, 4) derart entkoppelbar ist, dass bei Bewegung der Türflügel (3, 4) aus der Öffnungsposition in die Schließposition die Türflügel (10, 11) in der Auszugsposition verbleiben und/oder bei Bewegung der Türflügel (3, 4) aus der Schließposition in die Öffnungsposition die Türflügel (10, 11) in der Rückzugsposition verbleiben und/oder dass das Öffnungsmittel (6) und/oder die Schließmechanik (13) elektronisch ansteuerbar ist.

16. Fahrzeug (20) mit einer Wohnkabine (2) mit Ein- und/oder Ausstiegsöffnung (5), insbesondere ein Caravan oder ein Motorcaravan, umfassend das Fahrzeugtürsystem (1) nach einem der Ansprüche 1 bis 16.
